# EUROPEAN PATENT SPECIFICATION

(11) **EP 4 250 315 B1**
(45) Date of publication and mention of the grant of the patent: **04.11.2026**
(21) Application number: 20965463.1
(22) Date of filing: 16.12.2020
(51) Int. Cl.: G21C 15/18, G21C 9/016

(54) **SAFETY SYSTEM AND SAFETY CONTROL METHOD FOR PREVENTING MOLTEN CORIUM FROM MELTING THROUGH RPV**
SICHERHEITSSYSTEM UND SICHERHEITSSTEUERUNGSVERFAHREN ZUR VERHINDERUNG DES SCHMELZENS VON GESCHMOLZENEM CORIUM DURCH RPV
SYSTÈME DE SÉCURITÉ ET PROCÉDÉ DE CONTRÔLE DE SÉCURITÉ POUR EMPÊCHER LA FUSION DE CORIUM FONDU À TRAVERS UNE CUVE SOUS PRESSION DE RÉACTEUR (RPV)

(43) Date of publication of application: 27.09.2023
(73) Proprietor: China Nuclear Power Technology Research Institute Co., Ltd., Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: ZHAN, Dekui, Shenzhen, Guangdong 518031 (CN); XIA, Shaoxiong, Shenzhen, Guangdong 518031 (CN); CHEN, Peng, Shenzhen, Guangdong 518031 (CN); FU, Hui, Shenzhen, Guangdong 518031 (CN); WU, Zijie, Shenzhen, Guangdong 518031 (CN); HE, Dongyu, Shenzhen, Guangdong 518031 (CN); LIU, Chunrong, Shenzhen, Guangdong 518031 (CN)
(74) Representative: Westphal, Mussgnug & Partner, Patentanwälte mbB
(86) International application number: PCT/CN2020/136914
(87) International publication number: WO 2022/126445

(56) References cited:
- CN-A- 105 047 235
- CN-U- 205 789 135
- CN-U- 207 572 071
- US-A- 5 096 659
- US-B1- 6 285 727

## Description

### FIELD OF THE INVENTION

The invention relates to the technical field of nuclear power, in particular to a safety system and a safety control method for preventing molten corium from melting through an RPV.

### DESCRIPTION OF THE RELATED ART

For low-power nuclear power plants (200-300MWe), the core will undergo the process of water loss, temperature rise and meltdown in the event of a severe accident, and the molten core will collapse and fall to a lower head of a reactor pressure vessel (RPV). If the high-temperature molten corium cannot be cooled effectively in time, the molten corium may melt through the RPV, resulting in a large amount of radioactive material leakage. In order to prevent the RPV from being melted through under severe accident conditions, in view of the low thermal power characteristics of the low-power nuclear power plants, an in-vessel corium retention (IVR) strategy has been adopted in which a water injection system is set up in a reactor pit. Different from a natural circulation cooling method used by high-power nuclear power plants for RPV cooling, the low-power nuclear power plants adopt a tank boiling method for RPV cooling, which takes away the sensible heat and decay heat of the molten corium and finally makes the molten corium cool down and stay in the lower head of the reactor pressure vessel, thus ensuring the integrity of the pressure vessel.

Most of the existing large-scale pressurized water reactor nuclear power plants (with a thermal power above 600MWeu) adopt the corium cooling and retention strategy to achieve the in-vessel corium cooling and retention under severe accidents, thereby maintaining the integrity of the RPV under severe accidents. Generally speaking, large nuclear power plants set up a thermal insulation layer flow channel inside the reactor pit. In the event of a severe accident, water is injected into the reactor pit by means of passive water injection or active water injection; after the reactor pit is submerged, the cooling water at the outer wall surface of the RPV is driven by means of natural circulation or forced circulation to conduct convective heat transfer. This design involves the design of a metal insulation layer, and a water inlet, an exhaust hole and the circulation flow channel of the insulation layer. However, this structure can be greatly affected by the structural integrity of the insulation layer, and reliability of the water inlet of the insulating layer and an exhaust hole cover plate can also affect the circulating flow. In addition, the installation cost, manufacturing cost and maintenance cost of the above devices are relatively high.

Reference is made to publication US 6 285 727 B1, which pertains to a nuclear reactor plant with a light water reactor comprising a containment having an upper space and a lower space. The lower space is separated from the upper space by a separating member and arranged to house a cooling medium. Furthermore, the plant comprises a reactor vessel housing a reactor core and provided in the upper space. The separating member comprises a portion which is arranged to be located at such a position that the surface portion facing the lower space is in contact with the cooling medium. The reactor vessel is provided above the portion.

### SUMMARY OF THE INVENTION

The technical problem to be solved by the present invention is to provide a simple and reliable safety system for preventing molten corium from melting through an RPV and a safety control method for preventing molten corium from melting through an RPV. The problem underlying the present application is solved by a safety system having the features of claim 1 and by a safety control method having the features of claim 8.

The technical solution adopted by the present invention to solve the technical problem is providing a safety system for preventing molten corium from melting through an RPV, which includes a reactor pit for receiving the RPV, a cooling water tank, a cooling channel and a water injection pipeline.

The cooling water tank is arranged at the outer periphery of the reactor pit, the cooling channel is arranged at the bottom of the reactor pit and in communication with the cooling water tank; the water injection pipeline is connected between the cooling water tank and the reactor pit, cooling water in the cooling water tank is passively injected into the reactor pit through the water injection pipeline under the action of gravity.

According to the present invention, a shielding sealing layer is provided at the pit opening of the reactor pit, which seals the pit opening while leaving a steam channel; the steam channel is located between the shielding sealing layer and the outer wall surface of the RPV.

Preferably, a specular reflection layer is provided on the inner peripheral wall surface and the inner bottom surface of the reactor pit.

Preferably, the safety system further includes at least one anti-convection plate arranged on the inner peripheral wall surface of the reactor pit.

The first end of the anti-convection plate is connected to the specular reflection layer, and the opposite second end is inclined upward and close to the outer wall surface of the RPV.

Preferably, the interval between the second end of the anti-convection plate and the outer wall surface of the RPV is 40mm-60mm.

Preferably, the water injection pipeline is provided with a control valve for controlling on-off of the water injection pipeline.

Preferably, the reactor pit is made of stainless steel plates, and the side wall of the reactor pit forms the inner side wall of the cooling water tank.

Preferably, the bottom plate of the reactor pit includes two stainless steel plates that are spaced vertically, and the interlayer between the two stainless steel plates forms the cooling channel.

The present invention further provides a safety control method for preventing molten corium from melting through an RPV, which adopts the safety system for preventing molten corium from melting through the RPV according to any one of above, and the safety control method includes the following steps: in the event of a severe accident, before the molten corium collapses to the lower head of the RPV, the cooling water in the cooling water tank is passively injected into the reactor pit through the water injection pipeline under the action of gravity.

Preferably, the cooling water in the reactor pit boils and evaporates after exchanging heat with the RPV, which takes away the heat on the outer surface of the RPV, and at the same time transfers the heat to the cooling water tank through thermal convection and thermal conduction

Preferably, the safety control method further includes the following steps: under extreme conditions in which the RPV is melted through by the molten corium, the cooling water in the cooling channel at the bottom of the reactor pit exchanges heat with the cooling water that enters the reactor pit and is located below the RPV, so as to cool the bottom of the reactor pressure vessel to take away the heat of the molten corium and prevent the molten corium from burning through the bottom plate of the reactor pit.

Preferably, part of the water vapor in the reactor pit is discharged outward through the steam channel at the pit opening; the discharged water vapor is condensed into water and then returned into the cooling water tank.

Preferably, the safety control method further includes the following steps: under normal working conditions, a cooling space between the reactor pit and the RPV forms a heat preservation space formed by relatively still air, the heat of the RPV is transferred to the air in the reactor pit, and then conducted to the cooling water tank through the side wall of the reactor pit.

The present invention has the following beneficial effects: in the event of a severe accident working condition, water can be passively injected into the reactor pit under the action of gravity, without relying on an external AC power supply; the system is simple and has high reliability, which can realize in-vessel corium retention for low-power nuclear power plants, thereby improving the safety of nuclear reactors, and reducing the risk of large-scale release of radioactive materials.

### BRIEF DESCRIPTION OF THE DRAWINGS

The present invention will be further described below in conjunction with the accompanying drawings and embodiments, in which:
Fig. 1 is a top view of a structure of a safety system for preventing molten corium from melting through an RPV; and
Fig. 2 is a cross-sectional view of a structure of a safety system for preventing molten corium from melting through an RPV according to an embodiment of the present invention.

### DETAILED DESCRIPTION OF EMBODIMENTS

In order to have a better understanding of the technical features, objectives and results of the present invention, the specific embodiments of the present invention will now be described in detail with reference to the accompanying drawings.

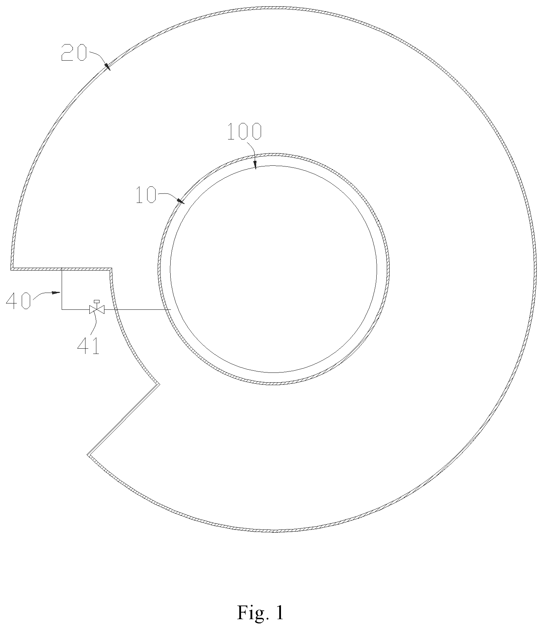

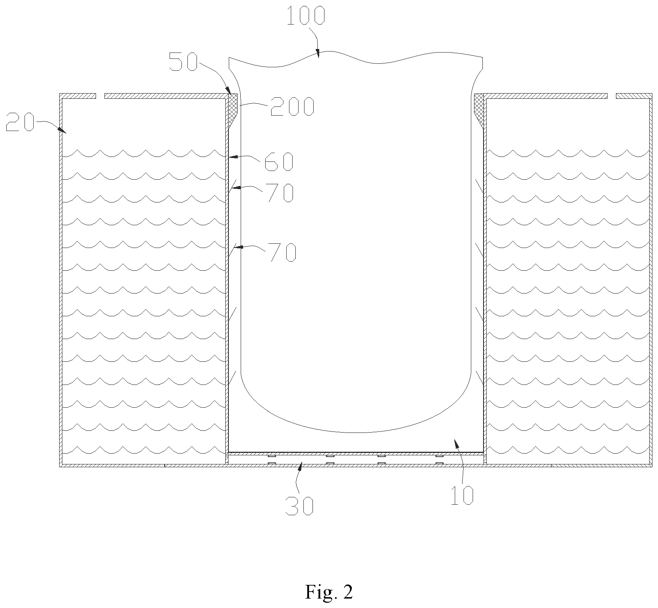

As shown in Figs. 1 and 2, a safety system for preventing molten corium from melting through an RPV. includes a reactor pit 10 for receiving a reactor pressure vessel (RPV) 100, a cooling water tank 20, a cooling channel 30, and a water injection pipeline 40.

The reactor pressure vessel 100 is suspended in the reactor pit 10, with a space left between the outer surface (including an outer wall surface and a bottom surface) of the reactor pressure vessel 100 and the reactor pit 10 to form a cooling space for circulation of injected cooling water or air therein. The cooling water tank 20 is arranged at the outer periphery of the reactor pit 10, which can provide cooling water for the cooling space, and can also perform heat exchange with the cooling water in the reactor pit 10 to realize the cooling of the reactor pressure vessel 100. The cooling channel 30 is arranged at the bottom of the reactor pit 10 and in communication with the cooling water tank 20, such that the cooling channel 30 is also filled with cooling water and hence can perform heat exchange with the cooling water at the bottom of the reactor pit 10, thereby realizing the cooling of the bottom of the reactor pressure vessel 100. The solution of double-layer in-vessel corium retention (IVR) is thus accomplished.

The water injection pipeline 40 is connected between the cooling water tank 20 and the reactor pit 10. The cooling water in the cooling water tank 20 is passively injected into the reactor pit 10 through the water injection pipeline 40 under the action of gravity, without relying on an external AC power supply, which results in high reliability. Preferably, the water injection pipeline 40 is connected between the upper end of the cooling water tank 20 and the upper end of the reactor pit 10, so that the cooling water can be passively injected into the reactor pit 10 and the submerging cooling water level can be above an active section of the core.

The water injection pipeline 40 is provided with a control valve 41 for controlling on-off of the water injection pipeline 40. The control valve may be an electric valve.

As shown in Fig. 2, in this embodiment, the reactor pit 10 is made of stainless steel plates, so that the side wall and the bottom plate of the reactor pit 10 are all formed by stainless steel plates. Dimensions, such as the inner diameter and depth of the reactor pit 10, are set according to the requirements of the reactor pressure vessel 100. The side wall of the reactor pit 10 forms the inner side wall of the cooling water tank 20. Similarly, the outer side wall of the cooling water tank 20 is also made of stainless steel plates. The bottom plate of the reactor pit 10 includes two stainless steel plates that are vertically spaced, and an interlayer between the two stainless steel plates forms a cooling channel 30. Two ends of the cooling channel 30 can be directly opened to communicate with the cooling water tank 20, or each provided with a vertical plate for support the stainless steel plates, and a through hole is defined through each vertical plate to realize the circulation of the cooling water.

The reactor pressure vessel 100 is arranged in the reactor pit 10, occupying a majority of the space in the reactor pit 10. The volume of the cooling space between the reactor pressure vessel 100 and the inner wall surface of the reactor pit 10 is small, so that the cooling space can be filled with cooling water submerging the reactor pit 10 in a short time. After the cooling water enters the reactor pit 10, the reactor pressure vessel 100 is directly cooled by means of the tank boiling method, and the heat of the molten corium in the lower head of the reactor pressure vessel 100 is taken away to maintain the integrity of the reactor pressure vessel 100.

In order to reduce the heat dissipation caused by convection of air inside the reactor pit 10, a shielding sealing layer 50 is provided at the pit opening of the reactor pit 10 to block the pit opening while leaving a steam channel 200. The steam channel 200 is located between the shielding sealing layer 50 and the outer wall surface of the reactor pressure vessel. The steam channel 200 communicates the cooling space in the reactor pit 10 with a large space outside the reactor pit 10 (containment large space), for allowing the steam in the reactor pit 10 to be discharged out of the reactor pit 10 through the steam channel 200.

A specular reflection layer 60 is provided on the inner peripheral wall surface (i.e. the inner wall surface of the side wall) and the inner bottom surface (i.e. the upper surface of the bottom plate) of the reactor pit 10 to reduce heat dissipation caused by thermal radiation.

The safety system may further include at least one anti-convection plate 70 disposed on the inner peripheral wall surface of the reactor pit 10. The anti-convection plate 70 has opposite first and second ends, the first end of the anti-convection plate 70 is connected to the specular reflection layer 60, and the second end is inclined upward and close to the outer wall surface of the reactor pressure vessel 100, such that the anti-convection plate 70 is arranged within the reactor pit 10 in an upward inclined manner.

The arrangement of the anti-convection plate 70 can further reduce air convection at the outer wall surface of the reactor pressure vessel 100 and, at the same time, it can also ensure steam overflow when the tank boiling occurs at the outer wall surface of the RPV after the reactor pit 10 is submerged with water under severe accident conditions.

When a number of the anti-convection plates 70 are provided, they are distributed in the reactor pit 10 at intervals along a height direction of the reactor pit 10.

In some embodiments, the interval between the second end of the anti-convection plate 70 and the outer wall surface of the reactor pressure vessel 100 is 40mm-60mm.

In an exemplary embodiment, the cooling water tank 20 is a large cooling water tank, surrounding the periphery of the reactor pit 10, the volume of the cooling water tank 20 is greater than 500m³, and the wall thickness of the cooling water tank 20 is 20-40mm. The free volume of the reactor pit 10 (i.e. the volume of the cooling space) is 7m³. After the cooling water in the reactor pit 10 is heated by the RPV, the heat can be directly transferred to the cooling water tank 20. A small amount of steam may be discharged into a containment via the steam channel 200 at the top of the reactor pit 10.

The distance between the reactor pressure vessel 100 and the bottom of the reactor pit 10 is relatively small, which is about 200mm. Under extreme working conditions, assuming that the molten corium melts through the RPV, the corium will reset to the bottom of the RPV. At this time, due to the presence of the cooling water tank 20 and the cooling channel 30 at the bottom of the reactor pit 10, a secondary corium cooling and retention device is formed, which finally cools and retains the molten corium inside the reactor pit 10.

The safety control method for preventing the molten corium from melting through the RPV of the present invention is realized by the above-described safety system, and the safety control method may include the following steps: when a severe accident occurs, before the molten corium collapses to the lower head of the reactor pressure vessel 100, the cooling water in the cooling water tank 20 is passively injected into the reactor pit 10 through the water injection pipeline 40 under the action of gravity.

The initial level of the water surface of the cooling water tank 20 is above the upper surface of the active section of the core, and the volume of the cooling water above the upper surface of the active section of the core can satisfy that the submerging water level after the water injection is still above the active section of the core.

The cooling water in the reactor pit 10 boils and evaporates after exchanging heat with the reactor pressure vessel 100, which takes away the heat from the outer surface of the reactor pressure vessel 100, and at the same time transfers the heat to the cooling water tank 20 through thermal convection and thermal conduction. Part (a small amount) of the water vapor in the reactor pit 10 is discharged to the outside through the steam channel 200 at the pit opening; the discharged water vapor is condensed into water and then returned to the cooling water tank 20, so as to provide a long-term stable heat sink for implementation of the in-vessel corium retention (IVR).

Under the extreme working condition that the reactor pressure vessel 100 is melted through by the molten corium, the cooling water in the cooling channel 30 at the bottom of the reactor pit 10 exchanges heat with the cooling water that enters the reactor pit 10 and is located below the reactor pressure vessel 100, so as to cool the bottom of the reactor pressure vessel 100 to take away the heat of the molten corium and prevent the molten corium from burning through the bottom plate of the reactor pit 10.

In addition, in combination with the safety system of the present invention, under normal working conditions (no severe accident occurring), the cooling space between the reactor pit 10 and the reactor pressure vessel 100 forms a heat preservation space formed by relatively still air, the heat of the reactor pressure vessel 100 is transferred to the air in the reactor pit 10, and then conducted to the cooling water tank 20 through the side wall of the reactor pit 10.

The above are only embodiments of the present invention and do not limit the scope of the present invention.

## Claims

1. A safety system for preventing molten corium from melting through a reactor pressure vessel, RPV, wherein the safety system comprises a reactor pit (10) for receiving the RPV (100), a cooling water tank (20), a cooling channel (30) and a water injection pipeline (40);
wherein the cooling water tank (20) is arranged at the outer periphery of the reactor pit (10), the cooling channel (30) is arranged at the bottom of the reactor pit (10) and in communication with the cooling water tank (20); the water injection pipeline (40) is connected between the cooling water tank (20) and the reactor pit (10) and arranged such that cooling water in the cooling water tank (20) can be passively injected into the reactor pit (10) through the water injection pipeline (40) under the action of gravity;
**characterized in that** a shielding sealing layer (50) is provided at the pit opening of the reactor pit (10), which blocks the pit opening while leaving a steam channel (200); and the steam channel (200) is located between the shielding sealing layer (50) and the outer wall surface of the RPV (100).

2. The safety system for preventing molten corium from melting through the RPV according to claim 1, **characterized in that** a specular reflection layer (60) is provided on the inner peripheral wall surface and the inner bottom surface of the reactor pit (10).

3. The safety system for preventing molten corium from melting through the RPV according to claim 2, **characterized in that** the safety system further comprises at least one anti-convection plate (70) arranged on the inner peripheral wall surface of the reactor pit (10);
wherein the first end of the anti-convection plate (70) is connected to the specular reflection layer (60), and the opposite second end is inclined upward and close to the outer wall surface of the RPV (100).

4. The safety system for preventing molten corium from melting through the RPV according to claim 3, **characterized in that** an interval between the second end of the anti-convection plate (70) and the outer wall surface of the RPV (100) is 40mm-60mm.

5. The safety system for preventing molten corium from melting through the RPV according to claim 1, **characterized in that** the water injection pipeline (40) is provided with a control valve (41) for controlling on-off of the water injection pipeline (40).

6. The safety system for preventing molten corium from melting through the RPV according to any one of claims 1-5, **characterized in that** the reactor pit (10) is made of stainless steel plates; the side wall of the reactor pit (10) forms the inner side wall of the cooling water tank (20).

7. The safety system for preventing molten corium from melting through the RPV according to claim 6, **characterized in that** a bottom plate of the reactor pit (10) comprises two stainless steel plates that are spaced vertically, and the interlayer between the two stainless steel plates forms the cooling channel (30).

8. A safety control method for preventing molten corium from melting through a reactor pressure vessel, RPV, **characterized in that** the safety system for preventing molten corium from melting through the RPV according to any one of claims 1-7 is adopted, and the safety control method comprises the following steps: in the event of a severe accident, before the molten corium collapses to the lower head of the RPV (100), the cooling water in the cooling water tank (20) is passively injected into the reactor pit (10) through the water injection pipeline (40) under the action of gravity.

9. The safety control method for preventing molten corium from melting through the RPV according to claim 8, **characterized in that** the cooling water in the reactor pit (10) boils and evaporates after exchanging heat with the RPV (100), which takes away the heat on the outer surface of the RPV (100), and at the same time transfers the heat to the cooling water tank (20) through thermal convection and thermal conduction.

10. The safety control method for preventing molten corium from melting through the RPV according to claim 9, **characterized by** further comprising the following steps: under extreme conditions in which the RPV (100) is melted through by the molten corium, the cooling water in the cooling channel (30) at the bottom of the reactor pit (10) exchanges heat with the cooling water that enters the reactor pit (10) and is located below the RPV (100), so as to cool the bottom of the reactor pressure vessel (100) to take away the heat of the molten corium and prevent the molten corium from burning through the bottom plate of the reactor pit (10).

11. The safety control method for preventing molten corium from melting through the RPV according to claim 9, **characterized in that** part of the water vapor in the reactor pit (10) is discharged outward through the steam channel (200) at the pit opening; the discharged water vapor is condensed into water and then returned into the cooling water tank (20).

12. The safety control method for preventing molten corium from melting through the RPV according to any one of claims 8-11, **characterized by** further comprising the following steps: under normal working conditions, a cooling space between the reactor pit (10) and the RPV (100) forms a heat preservation space formed by relatively still air, the heat of the RPV (100) is transferred to the air in the reactor pit (10), and then conducted to the cooling water tank (20) through the side wall of the reactor pit (10).

## Patentansprüche

1. Sicherheitssystem zur Verhinderung des Schmelzens von geschmolzenem Corium durch einen Reaktordruckbehälter, RPV, wobei das Sicherheitssystem eine Reaktorgrube (10) zur Aufnahme des RPV (100), einen Kühlwassertank (20), einen Kühlkanal (30) und eine Wassereinspritzleitung (40) umfasst;
wobei der Kühlwassertank (20) am äußeren Umfang der Reaktorgrube (10) angeordnet ist, der Kühlkanal (30) am Boden der Reaktorgrube (10) angeordnet ist und mit dem Kühlwassertank (20) kommuniziert; die Wassereinspritzleitung (40) zwischen dem Kühlwassertank (20) und der Reaktorgrube (10) verbunden und derart angeordnet ist, dass Kühlwasser im Kühlwassertank (20) unter Einwirkung der Schwerkraft durch die Wassereinspritzleitung (40) passiv in die Reaktorgrube (10) eingespritzt werden kann;
**dadurch gekennzeichnet, dass** an der Grubenöffnung der Reaktorgrube (10) eine abschirmende Dichtungsschicht (50) bereitgestellt ist, die die Grubenöffnung verschließt, während ein Dampfkanal (200) frei bleibt; und dass sich der Dampfkanal (200) zwischen der abschirmenden Dichtungsschicht (50) und der Außenwandoberfläche des RPV (100) befindet.

2. Sicherheitssystem zur Verhinderung des Schmelzens von geschmolzenem Corium durch den RPV nach Anspruch 1, **dadurch gekennzeichnet, dass** auf der inneren Umfangswandoberfläche und der inneren Bodenoberfläche der Reaktorgrube (10) eine spiegelnde Reflexionsschicht (60) bereitgestellt ist.

3. Sicherheitssystem zur Verhinderung des Schmelzens von geschmolzenem Corium durch den RPV nach Anspruch 2, **dadurch gekennzeichnet, dass** das Sicherheitssystem ferner mindestens eine Antikonvektionsplatte (70) umfasst, die an der inneren Umfangswandoberfläche der Reaktorgrube (10) angeordnet ist;
wobei das erste Ende der Antikonvektionsplatte (70) mit der spiegelnden Reflexionsschicht (60) verbunden ist und das gegenüberliegende zweite Ende nach oben geneigt ist und nahe an der Außenwandoberfläche des RPV (100) liegt.

4. Sicherheitssystem zur Verhinderung des Schmelzens von geschmolzenem Corium durch den RPV nach Anspruch 3, **dadurch gekennzeichnet, dass** ein Abstand zwischen dem zweiten Ende der Antikonvektionsplatte (70) und der Außenwandoberfläche des RPV (100) 40 mm-60 mm beträgt.

5. Sicherheitssystem zur Verhinderung des Schmelzens von geschmolzenem Corium durch den RPV nach Anspruch 1, **dadurch gekennzeichnet, dass** die Wassereinspritzleitung (40) mit einem Steuerventil (41) zur Auf-Zu-Steuerung der Wassereinspritzleitung (40) bereitgestellt ist.

6. Sicherheitssystem zur Verhinderung des Schmelzens von geschmolzenem Corium durch den RPV nach einem der Ansprüche 1 bis 5, **dadurch gekennzeichnet, dass** die Reaktorgrube (10) aus Edelstahlplatten hergestellt ist; die Seitenwand der Reaktorgrube (10) die innere Seitenwand des Kühlwassertanks (20) ausbildet.

7. Sicherheitssystem zur Verhinderung des Schmelzens von geschmolzenem Corium durch den RPV nach Anspruch 6, **dadurch gekennzeichnet, dass** eine Bodenplatte der Reaktorgrube (10) zwei vertikal beabstandete Edelstahlplatten umfasst und die Zwischenschicht zwischen den zwei Edelstahlplatten den Kühlkanal (30) ausbildet.

8. Sicherheitssteuerungsverfahren zur Verhinderung des Schmelzens von geschmolzenem Corium durch einen Reaktordruckbehälter, RPV, **dadurch gekennzeichnet, dass** das Sicherheitssystem zur Verhinderung des Schmelzens von geschmolzenem Corium durch den RPV nach einem der Ansprüche 1 bis 7 angewendet wird und das Sicherheitssteuerungsverfahren die folgenden Schritte umfasst: Im Falle eines schweren Unfalls wird, bevor das geschmolzene Corium auf die untere Kalotte des RPV (100) stürzt, das Kühlwasser im Kühlwassertank (20) unter Einwirkung der Schwerkraft durch die Wassereinspritzleitung (40) passiv in die Reaktorgrube (10) eingespritzt.

9. Sicherheitssteuerungsverfahren zur Verhinderung des Schmelzens von geschmolzenem Corium durch den RPV nach Anspruch 8, **dadurch gekennzeichnet, dass** das Kühlwasser in der Reaktorgrube (10) nach dem Wärmeaustausch mit dem RPV (100) siedet und verdampft, wodurch die Wärme an der Außenoberfläche des RPV (100) abgeführt und gleichzeitig durch Wärmekonvektion und Wärmeleitung auf den Kühlwassertank (20) übertragen wird.

10. Sicherheitssteuerungsverfahren zur Verhinderung des Schmelzens von geschmolzenem Corium durch den RPV nach Anspruch 9, ferner **gekennzeichnet durch** Umfassen der folgenden Schritte: Unter extremen Bedingungen, bei denen der RPV (100) durch das geschmolzene Corium durchgeschmolzen wird, tauscht das Kühlwasser im Kühlkanal (30) am Boden der Reaktorgrube (10) Wärme mit dem Kühlwasser aus, das in die Reaktorgrube (10) eintritt und sich unterhalb des RPV (100) befindet, um den Boden des Reaktordruckbehälters (100) zu kühlen, die Wärme des geschmolzenen Coriums abzuführen und zu verhindern, dass das geschmolzene Corium die Bodenplatte der Reaktorgrube (10) durchbrennt.

11. Sicherheitssteuerungsverfahren zur Verhinderung des Schmelzens von geschmolzenem Corium durch den RPV nach Anspruch 9, **dadurch gekennzeichnet, dass** ein Teil des Wasserdampfs in der Reaktorgrube (10) durch den Dampfkanal (200) an der Grubenöffnung nach außen abgelassen wird; der abgelassene Wasserdampf zu Wasser kondensiert und dann in den Kühlwassertank (20) zurückgeführt wird.

12. Sicherheitssteuerungsverfahren zur Verhinderung des Schmelzens von geschmolzenem Corium durch den RPV nach einem der Ansprüche 8 bis 11, ferner **gekennzeichnet durch** Umfassen der folgenden Schritte: Unter normalen Betriebsbedingungen bildet ein Kühlraum zwischen der Reaktorgrube (10) und dem RPV (100) einen durch relativ ruhende Luft ausgebildeten Wärmeerhaltungsraum aus, die Wärme des RPV (100) wird auf die Luft in der Reaktorgrube (10) übertragen und dann durch die Seitenwand der Reaktorgrube (10) zum Kühlwassertank (20) geleitet.

## Revendications

1. Système de sécurité pour empêcher la fusion de corium fondu à travers une cuve sous pression de réacteur, RPV, dans lequel le système de sécurité comprend une fosse de réacteur (10) destinée à recevoir la RPV (100), un réservoir d'eau de refroidissement (20), un canal de refroidissement (30) et une conduite d'injection d'eau (40) ;
dans lequel le réservoir d'eau de refroidissement (20) est agencé au niveau de la périphérie externe de la fosse de réacteur (10), le canal de refroidissement (30) est agencé au fond de la fosse de réacteur (10) et en communication avec le réservoir d'eau de refroidissement (20) ; la conduite d'injection d'eau (40) est connectée entre le réservoir d'eau de refroidissement (20) et la fosse de réacteur (10) et agencée de sorte que l'eau de refroidissement dans le réservoir d'eau de refroidissement (20) peut être injectée passivement dans la fosse de réacteur (10) à travers la conduite d'injection d'eau (40) sous l'action de la gravité ;
**caractérisé en ce qu'**une couche d'étanchéité de protection (50) est prévue au niveau de l'ouverture de fosse de la fosse de réacteur (10), qui bloque l'ouverture de fosse tout en laissant un canal de vapeur (200) ; et le canal de vapeur (200) est situé entre la couche d'étanchéité de protection (50) et la surface de paroi externe de la RPV (100).

2. Système de sécurité pour empêcher la fusion de corium fondu à travers la cuve sous pression de réacteur selon la revendication 1, **caractérisé en ce qu'**une couche de réflexion spéculaire (60) est prévue sur la surface de paroi périphérique interne et la surface inférieure interne de la fosse de réacteur (10).

3. Système de sécurité pour empêcher la fusion de corium fondu à travers la cuve sous pression de réacteur selon la revendication 2, **caractérisé en ce que** le système de sécurité comprend en outre au moins une plaque anti-convection (70) agencée sur la surface de paroi périphérique interne de la fosse de réacteur (10) ;
dans lequel la première extrémité de la plaque anti-convection (70) est connectée à la couche de réflexion spéculaire (60), et la seconde extrémité opposée est inclinée vers le haut et proche de la surface de paroi externe de la RPV (100).

4. Système de sécurité pour empêcher la fusion de corium fondu à travers la cuve sous pression de réacteur selon la revendication 3, **caractérisé en ce qu'**un intervalle entre la seconde extrémité de la plaque anti-convection (70) et la surface de paroi externe de la RPV (100) est de 40 mm à 60 mm.

5. Système de sécurité pour empêcher la fusion de corium fondu à travers la cuve sous pression de réacteur selon la revendication 1, **caractérisé en ce que** la conduite d'injection d'eau (40) est munie d'une vanne de contrôle (41) pour contrôler la mise en marche/l'arrêt de la conduite d'injection d'eau (40).

6. Système de sécurité pour empêcher la fusion de corium fondu à travers la cuve sous pression de réacteur selon l'une quelconque des revendications 1 à 5, **caractérisé en ce que** la fosse de réacteur (10) est constituée de plaques en acier inoxydable ; la paroi latérale de la fosse de réacteur (10) forme la paroi latérale interne du réservoir d'eau de refroidissement (20).

7. Système de sécurité pour empêcher la fusion de corium fondu à travers la cuve sous pression de réacteur selon la revendication 6, **caractérisé en ce qu'**une plaque de fond de la fosse de réacteur (10) comprend deux plaques en acier inoxydable qui sont espacées verticalement, et la couche intermédiaire entre les deux plaques en acier inoxydable forme le canal de refroidissement (30).

8. Procédé de contrôle de sécurité pour empêcher la fusion de corium fondu à travers une cuve sous pression de réacteur, RPV, **caractérisé en ce que** le système de sécurité pour empêcher la fusion de corium fondu à travers la cuve sous pression de réacteur selon l'une quelconque des revendications 1 à 7 est adopté, et le procédé de contrôle de sécurité comprend les étapes suivantes : en cas d'accident grave, avant que le corium fondu ne s'effondre sur la partie inférieure de la RPV (100), l'eau de refroidissement dans le réservoir d'eau de refroidissement (20) est injectée passivement dans la fosse de réacteur (10) à travers la conduite d'injection d'eau (40) sous l'action de la gravité.

9. Procédé de contrôle de sécurité pour empêcher la fusion de corium fondu à travers la cuve sous pression de réacteur selon la revendication 8, **caractérisé en ce que** l'eau de refroidissement dans la fosse de réacteur (10) bout et s'évapore après avoir échangé de la chaleur avec la RPV (100), ce qui évacue la chaleur sur la surface de paroi externe de la RPV (100) et transfère simultanément la chaleur au réservoir d'eau de refroidissement (20) par convection thermique et conduction thermique.

10. Procédé de contrôle de sécurité pour empêcher la fusion de corium fondu à travers la cuve sous pression de réacteur selon la revendication 9, **caractérisé en ce qu'**il comprend en outre les étapes suivantes : dans des conditions extrêmes où la RPV (100) est fondue jusqu'à être traversée par le corium fondu, l'eau de refroidissement dans le canal de refroidissement (30) au fond de la fosse de réacteur (10) échange de la chaleur avec l'eau de refroidissement qui pénètre dans la fosse de réacteur (10) et est située sous la RPV (100), afin de refroidir le fond de la cuve sous pression de réacteur (100) pour évacuer la chaleur du corium fondu et empêcher le corium fondu de perforer la plaque de fond de la fosse de réacteur (10).

11. Procédé de contrôle de sécurité pour empêcher la fusion de corium fondu à travers la cuve sous pression de réacteur selon la revendication 9, **caractérisé en ce qu'**une partie de la vapeur d'eau dans la fosse de réacteur (10) est évacuée vers l'extérieur à travers le canal de vapeur (200) au niveau de l'ouverture de fosse ; la vapeur d'eau évacuée est condensée en eau puis renvoyée dans le réservoir d'eau de refroidissement (20).

12. Procédé de contrôle de sécurité pour empêcher la fusion de corium fondu à travers la cuve sous pression de réacteur selon l'une quelconque des revendications 8 à 11, **caractérisé en ce qu'**il comprend en outre les étapes suivantes : dans des conditions normales de fonctionnement, un espace de refroidissement entre la fosse de réacteur (10) et la RPV (100) forme un espace de conservation de la chaleur formé par de l'air relativement immobile, la chaleur de la RPV (100) est transférée à l'air dans la fosse de réacteur (10), puis conduite au réservoir d'eau de refroidissement (20) à travers la paroi latérale de la fosse de réacteur (10).
